Europäisches Patentamt

European Patent Office

Office européen des brevets

(11) Publication number: **0 178 815**
**B1**

(12) **EUROPEAN PATENT SPECIFICATION**

(45) Date of publication of patent specification: **17.11.88**

(51) Int. Cl.⁴: **G 02 B 6/10, G 02 B 6/12**

(21) Application number: **85306973.0**

(22) Date of filing: **30.09.85**

(54) Improvements relating to optical waveguides.

(30) Priority: **29.09.84 GB 8424668**

(43) Date of publication of application:
**23.04.86 Bulletin 86/17**

(45) Publication of the grant of the patent:
**17.11.88 Bulletin 88/46**

(84) Designated Contracting States:
**DE FR GB IT NL SE**

(56) References cited:
**US-A-4 400 052**
**PATENTS ABSTRACTS OF JAPAN, vol. 8, no.
60 (P-262) 1497r, 22nd March 1984**
**APPLIED OPTICS, vol. 11, no. 11, November
1972, pages 2482-2488, US; M.J. RAND et al.:
"Silicon oxynitride films on fused silica for
optical waveguides"**
**JOURNAL OF APPLIED PHYSICS; vol. 50, no.
10, October 1979, pages 6175-6182, US; W.K.
BURNS et al.: "Ti diffusion in Ti: LiNbO3 planar
and channel optical waveguides"**

(73) Proprietor: **PLESSEY OVERSEAS LIMITED
Vicarage Lane
Ilford Essex IGl 4AQ (GB)**

(72) Inventor: **Bennion, Ian
102 Cottingham Drive Moulton
Northampton NN3 ILG (GB)**
Inventor: **Stewart, William James
The Manor House Blakesley
Northampton (GB)**

(74) Representative: **Nicholson, Ronald
Intellectual Property Department The Plessey
Company plc 2-60 Vicarage Lane
Ilford Essex IG1 4AQ (GB)**

(56) References cited:
**IEEE TRANSACTIONS ON MICROWAVE
THEORY AND TECHNIQUES, vol. MTT-30, no.
10, October 1982, pages 1747-1753, IEEE, New
York, US; K. MICHIKAZU et al.: "Integrated
optical switch matrix for single-mode fiber
networks"**
**JOURNAL OF APPLIED PHYSICS, vol. 44, no. 8,
August 1973, pages 3703-3708, American
Institute of Physics, US; W.E. MARTIN:
"Waveguide electro-optic modulation in II-VI
compounds"**

Courier Press, Leamington Spa, England.

**Description**

This invention relates to optical waveguides and relates more specifically to such waveguides which are formed by the thermal diffusion of a deposited waveguide pattern (e.g. channels) of a suitable dopant material into a substrate of another material in order to produce an optical waveguide having light propagation channels of relatively high refractive index near the surface of the substrate.

The dopant material of waveguide devices which form the basis for a range of electro-optic modulation and switching devices typically comprises titanium which is diffused into a lithium niobate substrate.

The quality of the modulation and switching devices embodying such waveguides and, hence, the performance of such devices, is influenced by

(a) the ability to provide well-defined channel waveguide patterns

(b) the attenuation of any optical waves constrained to propagate in such channels and

(c) the proximity of any metallic or other electrodes that are absorbent at the optical frequencies involved.

One commonly encountered problem in the fabrication of optical waveguides by the thermal diffusion of deposited titanium channel patterns into a lithium niobate substrate is the unwanted diffusion of the element lithium out of the substrate materials. This unwanted diffusion produces changes in the crystal stoichiometry one effect of which is to increase the extraordinary refractive index of a layer at the surface of the lithium niobate substrate. This has an adverse effect on modulation and switching devices utilising such channel waveguides since between the channels of the waveguide there now exists a planar waveguide for waves of the extraordinary polarisation. It is already known from Japanese Patent No. JP—A—58—211 106 to overcome the problem of lithium oxide being diffused out of a lithium niobate substrate during the thermal diffusion of a deposited pattern of dopant material into the substrate by providing the substrate with a diffusion barrier layer after deposition of the dopant material pattern but before the thermal diffusion step.

It is besides known from IEEE Transactions on Microwave Theory and Techniques, Vol. MTT—30, No. 10, October 1982, pages 1747—1753, or from the Journal of Applied Physics, Vol. 44, No. 8, August 1973, pages 3703—3708, to provide metal electrodes over the waveguide as well as a dielectric buffer layer therebetween, after the thermal diffusion step, for the double purpose of accessing the required electro-optic coefficient and preventing absorption losses likely to result from the proximity of said metal electrodes.

The present invention is directed, concurrently, to overcoming of the problem of lithium being diffused out of the lithium niobate substrate during the manufacturing process, and during the device operation, to the prevention of a substantial absorption of optical waves propagating along the waveguide channels where the electrodes are situated, and thereby improve the performance of waveguide devices.

According to the present invention therefore there is provided a method of producing an integrated electro-optical waveguide structure having light propagation channels of relatively high refractive index near the surface of a substrate and provided with metal electrodes applied over said waveguide channels for the purpose of accessing the required electro-optic co-efficient, in which method the substrate, which comprises lithium niobate, is provided with a diffusion barrier layer deposited thereover after deposition of the dopant material pattern for forming said waveguide channels by thermal diffusion, but prior to said thermal diffusion, to prevent the diffusion of lithium out of the substrate, in which the diffusion barrier material is selected from a range of materials SiON to $Si_3N_4$ so that the diffusion barrier layer also provides an effective dielectric buffer layer to prevent substantial absorption of optical waves propagating along the waveguide channels due to the proximity of the metal electrodes, and in which the metal electrodes are applied over the diffusion barrier layer after the thermal diffusion step.

By way of explanation it may here be mentioned that in the Z-cut orientation of lithium niobate the highest electro-optic co-efficient, r33, is accessed by propagating light in the transverse magnetic polarisation in a waveguide wherein the applied electric field is parallel to the crystal Z-axis (the optic axis). For this polarisation, the propagating optical wave undergoes substantial absorption when electrodes are deposited directly on the waveguide surface without the intervention of any separating or buffer layer. It is therefore common practice to deposit a dielectric buffer layer between the waveguide surface and the metal electrodes to overcome this loss. In the present invention the layer of silicon nitride which acts as the diffusion barrier layer also becomes the buffer layer. This dielectric buffer layer is usually of low refractive index in order to minimise perturbation of the waveguide propagation constants. This favours the use of diffusion barrier layer material nearer to the form SiON in the range of materials above specified since it has the lower refractive index. As the barrier layer material is changed by decreasing the oxygen content, progressing ultimately to the form of $Si_3N_4$, the refractive index increases. However, the same general principles of the invention apply regardless of the material composition within this range.

Another advantage that the invention provides is that the layer of diffusion barrier material (e.g. silicon oxynitride) also serves to suppress surface deformation of the waveguide substrate which frequently results from the thermal diffusion process. Whilst the exact composition of the rough surface layer often produced during diffusion is not established with certainty it is related to compound formation as the result of the diffusion of lithium out of the lithium niobate substrate, as well as being due to stress and surface tension effects associated with the diffusion process. The provision of the diffusion barrier and buffer layer also acts to suppress the substrate surface deformation referred to and thereby reduce the attenuation normally produced by such deformation. Thus, the propagation loss of waveguides fabricated according to the present invention is significantly reduced.

By way of example the present invention will now be described with reference to the accompanying drawing which illustrates the steps in fabricating an optical channel waveguide in accordance with the present invention.

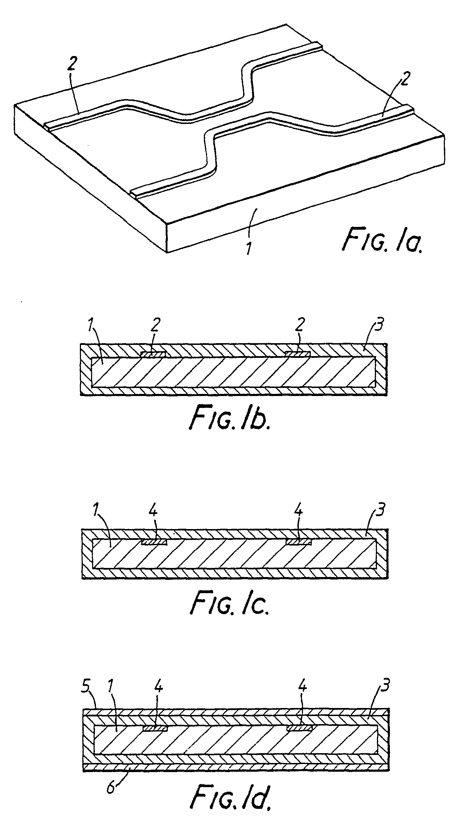

Referring to Figure 1(a) of the drawing the optical waveguide is fabricated from a substrate 1 of lithium niobate on to which is deposited, as by evaporation, sputtering, or other process, titanium which defines a pattern of channels 2. Before the titanium is diffused into the surface of the substrate 1 to produce light propagating channels of relatively high refractive index just below the substrate surface and, as shown in Figure 1(b), a diffusion barrier layer 3 of material selected from the range SiON to $Si_3N_4$ is deposited, as by chemical vapour deposition, or other process, over the entire surface of the substrate 1. As already mentioned the choice of diffusion barrier layer material will be made in dependence upon the need for a dielectric buffer layer of low refractive index where metal or other electrodes are applied to the substrate.

The deposited titanium channel pattern 2 is then thermally diffused into the surface of the lithium niobate substrate to provide as shown in Figure 1(c) a pattern of light propagating channels 4 located just below the surface of the substrate. These channels 4 will have a high refractive index. The diffusion barrier layer 3 prevents ions of lithium from being diffused out of the substrate material during the thermal diffusion process where the substrate is subjected to temperatures up to about 1150°C.

After the thermal diffusion step, metal or other electrodes 5 and 6 (e.g. aluminium, or chromium and gold) are deposited as by evaporation, sputtering, or other process, on to the surface of the substrate 1 as shown in Figure 1(d). The interposition of the barrier layer 3 also serves to provide a dielectric buffer layer of low refractive index which serves to reduce absorption, and thus attenuation, of the optical signals propagating along the waveguide channels due to the proximity of the metal or other electrodes 5 and 6. The lower the refractive index of the buffer layer material the lower will be the absorption of the propagating light signals. The material SiON will therefore be preferred in order to minimise the absorption of light signals by the electrodes.

As already explained the diffusion barrier/dielectric buffer layer 3 also serves to suppress the tendency of the substrate surface to roughen during the thermal diffusion step. In this way attenuation of the propagating light signals in the waveguide channels will be reduced still further.

## Claims

1. A method of producing an integrated electro-optical waveguide structure having light propagation channels (4) of relatively high refractive index near the surface of a substrate (1) and provided with metal electrodes (5, 6) applied over said waveguide channels for the purpose of accessing the required electro-optic co-efficient, in which method the substrate (1), which comprises lithium niobate, is provided with a diffusion barrier layer (3) deposited thereover after deposition of the dopant material pattern (2) for forming said waveguide channels (4) by thermal diffusion, but prior to said thermal diffusion, in order to prevent the diffusion of lithium out of the substrate, in which the diffusion barrier material is selected from a range of materials SiON to $Si_3N_4$ so that the diffusion barrier layer also provides an effective dielectric buffer layer to prevent substantial absorption of optical waves propagating along the waveguide channels due to the proximity of the metal electrodes, and in which the metal electrodes (5, 6) are applied over the diffusion barrier layer after the thermal diffusion step.

2. A method as claimed in Claim 1, in which the dopant material is titanium.

3. A method as claimed in Claim 1 or Claim 2, in which the diffusion barrier layer (3) is applied to the entire surface of the substrate.

4. A method as claimed in Claim 1, in which a channel pattern (2) of titanium is deposited on one surface of the lithium niobate substrate (1) by evaporation or sputtering, in which the diffusion barrier layer (3) is deposited by chemical vapour deposition over the entire surface of the substrate, in which the deposited titanium channel pattern (2) is thermally diffused into the surface of the substrate by subjecting the substrate to temperatures up to about 1150°C, and in which the metal electrodes (5, 6) are deposited on to opposed surfaces of the substrate including that into which the titanium has been diffused.

### Patentansprüche

1. Methode zur Erzeugung einer integrierten elektro-optischen Lichtleiterstruktur mit Lichtübertragungskanälen (14) relativ hohen Brechungsindexes nahe der Oberfläche des Substrates (1), und versehen mit Metallelektroden (5, 6) deponiert auf gesagten Lichtleiter-Kanälen, mit dem Zwecke des Erreichens des erwünschten elektro-optischen Koeffizienten, bei welcher Methode das aus Lithiumniobat bestehende Substrat (1) mit einer Diffundierungs-Sperrschicht (3) versehen ist, welche darüber nach Deposition des Dotierstoffes (2) zur Erzeugung gesagter darüber deponierter Lichtleiterkanäle (4) durch thermale Diffundierung deponiert wird, jedoch vor gesagter thermalen Diffundierung, um die Diffundierung von Lithium aus dem Substrat zu verhindern, wobei das Material der Diffundierungs-Sperrschicht aus der Serie von Stoffen SiON bis $Si_3N_4$ ausgesucht ist, wodurch die Diffundierungs-Sperrschicht ausserdem eine effektive dielektrische Pufferschicht bildet, um beträchtliche Absorption optischer Wellen entlang der Lichtleiterkanäle verursacht durch die Nahelage der Metall-Elektroden zu verhindern, und worin die Metallelektroden (5, 6) über der Diffundierungs-Sperrschicht nach dem thermalen Diffundierungsschritt deponiert werden.

2. Eine Methode wie in Anspruch 1 beansprucht, wobei das Dotiermaterial Titanium ist.

3. Eine Methode wie in Ansprüchen 1 oder 2 beansprucht, wobei die Diffundierungs-Sperrschichte (3) auf der gesamten Oberfläche des Substrats angebracht wird.

4. Eine Methode wie in Anspruch 1 beansprucht, wobei ein Kanalmuster (2) aus Titanium an einer Oberfläche des Lithiumniobat-Substrats (1) durch Evaporierung oder Sputtern deponiert wird, wobei die Diffundierungs-Sperrschichte (3) durch Chemical Vapour Deposition auf der gesamten Oberfläche des Substrats deponiert wird, wobei das deponierte Titanium-Kanalmuster (2) durch Aussetzen des Substrats an Temperaturen bis etwa 1150 grad C thermal in die Oberfläche des Substrats diffundiert wird, und wobei die Metallelektroden (5, 6) auf entgegengesetzen Oberflächen des Substrats deponiert sind, einschliesslich derjenigen Oberfläche in welche das Titanium diffundiert wurde.

**Revendications**

1. Procédé de fabrication d'une structure intégrée de guide d'ondes électro-optiques ayant des canaux (4) de propagation de lumière d'indice de réfraction relativement élevé à proximité de la surface du substrat (1) et ayant des électrodes métalliques (5, 6) appliquées au-dessus des canaux de guidage d'ondes afin que le coefficient électro-optique nécessaire soit obtenu, dans lequel le substrat (1) qui est formé de niobiate de lithium, a une couche (3) formant une barrière de diffusion déposée par-dessus après dépôt du dessin de matière de dopage (2) utilisé pour la formation des canaux de guidage d'ondes (4) par diffusion thermique, mais avant la diffusion thermique afin que la diffusion du lithium hors du substrat soit évitée, dans lequel le matériau de la barrière de diffusion est choisi dans la gamme de matériaux allant de SiON à $Si_3N_4$ afin que la couche barrière de diffusion constitue aussi une couche diélectrique tampon efficace destinée à empêcher une absorption notable des ondes optiques se propageant le long des canaux de guidage d'ondes à cause de la proximité des électrodes métalliques, et en ce que les électrodes métalliques (5, 6) sont appliquées au-dessus de la couche barrière de diffusion après l'étape de diffusion thermique.

2. Procédé selon la revendication 1, dans lequel la matière de dopage est le titane.

3. Procédé selon la revendication 1 ou 2, dans lequel la couche (3) formant la barrière de diffusion est appliquée sur toute la surface du substrat.

4. Procédé selon la revendication 1, dans lequel un dessin (2) de canaux de titane est déposé sur une première surface du substrat (1) de niobiate de lithium par évaporation ou pulvérisation, dans lequel la couche (3) formant la barrière de diffusion est déposée par dépôt chimique en phase vapeur sur toute la surface du substrat, dans lequel le dessin (2) des canaux de titane diffuse thermiquement dans la surface du substrat par application au substrat de températures pouvant atteindre 1150°C, et dans lequel les électrodes métalliques (5, 6) sont déposées sur les surfaces opposées du substrat, Y compris celles dans laquelle le titane à diffusé.

2

2

1

FIG. Ia.

1 2 2 3

FIG. Ib.

1 4 4 3

FIG. Ic.

5 1 4 4 3

6

FIG. Id.